Europäisches Patentamt

(19) European Patent Office

Office européen des brevets

(11) Veröffentlichungsnummer: **0 110 428**
**B1**

(12) # EUROPÄISCHE PATENTSCHRIFT

(45) Veröffentlichungstag der Patentschrift:
**13.09.89**

(51) Int. Cl.⁴: **B 60 K 41/08**

(21) Anmeldenummer: **83112240.3**

(22) Anmeldetag: **06.12.83**

(54) Fahrzeuggetriebe-Steuerungssystem.

(30) Priorität: **06.12.82 US 446915**
**06.12.82 US 446881**

(43) Veröffentlichungstag der Anmeldung:
**13.06.84 Patentblatt 84/24**

(45) Bekanntmachung des Hinweises auf die Patenterteilung:
**13.09.89 Patentblatt 89/37**

(84) Benannte Vertragsstaaten:
**AT BE CH DE FR GB IT LI NL SE**

(56) Entgegenhaltungen:
**EP-A-0 060 390**
**DE-A-2 752 568**
**DE-A-3 138 715**
**DE-A-3 201 440**
**FR-A-2 375 508**
**FR-A-2 448 077**
**GB-A-736 610**
**GB-A-2 025 546**
**GB-A-2 081 926**
**GB-A-2 090 926**
**US-A-1 336 796**
**US-A-2 755 679**
**US-A-3 451 284**
**US-A-3 628 642**
**US-A-4 208 925**
**US-A-4 324 153**

(73) Patentinhaber: **DEERE & COMPANY, 1 John Deere Road, Moline Illinois 61265 (US)**

(72) Erfinder: **McKee, Kevin Douglas, 1103 Lantern Square No. 5, Waterloo Iowa 50701 (US)**

(74) Vertreter: **Fricke, Joachim, Dr., Dr. R. Döring, Dr. J. Fricke, Patentanwälte Josephspitalstrasse 7, D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Steuerungssystem für schaltbare Getriebe von Motorfahrzeugen mit den Merkmalen des Oberbegriffs des Anspruchs 1.

Aus der FR-A-2 448 077 ist ein Steuerungssystem mit einem Fühler für die Drehgeschwindigkeit der Eingangswelle und der Ausgangswelle des Wechselgetriebes sowie mit einem Fühler bekannt, der auf die Stellung des Gaspedals anspricht. Die Fühlersignale werden einem Steuerkreis zugeführt, der das Getriebe in Abhängigkeit von den Fühlersignalen schaltet. Andere automatische Steuerungssysteme sind aus der US-A-4 208 925 und der FR-A-2 375 508 bekannt. Die Letztere weist eine Umschalteinrichtung für automatische oder manuelle Steuerung auf.

Ferner ist eine Vorrichtung zur Gang-Gruppenwahl für Kraftfahrzeug-Schaltgetriebe mit mindestens zwei nach dem selben Schaltschema schaltbaren Gruppen von Gängen bekannt (vgl. DE-A-2 752 568). Bei diesem bekannten Getriebe sorgt ein Gruppengetriebe dafür, daß das der Gruppe zugeordnete Zusatzgetriebe nur eingeschaltet werden kann, wenn der dabei zu wählende Gang zu einer Fahrtgeschwindigkeit führt, die nicht in Kontrast zu der tatsächlichen Fahrtgeschwindigkeit steht. Die Anordnung ist so getroffen, daß eine ungeeignete Gruppenvorwahl ausgeschlossen ist. Dies wird mit Hilfe von Vergleichseinrichtungen erreicht, die auf die Sensorsignale ansprechen, und zwar bei Überschreiten eines ersten unteren Schwellenwertes der Fahrtgeschwindigkeit und bei Überschreiten eines zweiten höheren Schwellenwertes. In beiden Fällen werden Ausgangssignale erzeugt, die eine Wählschaltung steuern, und zwar so, daß je nach Ausgangssignal die eine oder die andere von zwei wählbaren Gruppen freigegeben wird, während die andere Gruppe gesperrt bleibt.

Ferner ist aus der die Merkmale des Oberbegriffs von Anspruch 1 enthaltenden EP-A-60 390 eine selbsttätige Schaltvorrichtung für die Gänge eines Mehrstufen-Fahrzeuggetriebes bekannt bei dem jederzeit auch ein Schalten des Getriebes mittels Hand möglich ist. Die bekannte Anordnung weist einen Handschalthebel zum Schalten des Getriebes mittels Hand auf, z. B. für Gefahrensituationen oder bei Ausfall der Automatik. Ferner weist die Anordnung eine Rechnereinheit zum automatischen Ansteuern der Betätigungseinrichtungen für die Gangschaltung auf. Die Rechnereinheit arbeitet z. B. in Abhängigkeit von Informationen über die Motorbelastung und die Fahrzeuggeschwindigkeit. Sie kann die Schaltautomatik in Abhängigkeit von der Anfahrsituation ausschalten und bei Überschreiten einer unteren Geschwindigkeitsgrenze wieder einschalten. Auch kann die Rechnereinheit in bestimmten Betriebszuständen den Fahrer zum manuellen Eingreifen auffordern, anstatt die Automatik sofort einzuschalten. Dadurch wird der Fahrer nicht von automatischen Schaltvorgängen überrascht.

Ferner weist die bekannte Anordnung am Handschalthebel einen Handschalter auf, mit dem die Schaltautomatik z. B. bei Überholmanövern oder bei Bergfahrten ganz abgeschaltet werden kann. Ein weiterer automatisch arbeitender Schalter funktioniert in Abhängigkeit von scharfen Bremsvorgängen, um auch in diesen Situationen die Automatik abzuschalten. Demgegenüber ist es Aufgabe der Erfindung ein Steuerungssystem mit den Merkmalen des Oberbegriffs des Anspruchs 1 so weiterzubilden, daß dem Fahrer das Umgehen mit dem Fahrzeug erleichtert wird, so daß er sich auf andere Aufgaben konzentrieren kann, wobei die Schaltsicherheit entsprechend erhöht werden soll.

Diese Aufgabe wird durch die Merkmale des Anspruchs 1 gelöst.

Aufgrund dieser Ausbildung des Steuerungssystems wird wie bei den bekannten Systemen die Möglichkeit einer automatischen Steuerung und der einer manuellen Steuerung der Schaltvorgänge im vollen Umfange aufrechterhalten. Jedoch ermöglicht es dieses Steuerungssystem, daß automatisch eine Umschaltung in die manuelle Betriebsart erfolgt, wenn bestimmte störende Betriebszustände auftreten.

Dazu weist die Betriebsartauswahleinrichtung eine Fehlschalt-Fühleinrichtung auf, welche feststellt, wenn die Gangschalteinrichtungen des Getriebes in Abhängigkeit von den Gangschaltsignalen erfolgreich schaltet. Eine Einrichtung erzeugt ein Fehlersignal in Abhängigkeit von einer vorbestimmten Anzahl von erfolglosen Schaltversuchen der Gangschalteinrichtungen. Eine weitere Einrichtung unterbindet die automatische Erzeugung weiterer Gangschaltsignale nach Vorliegen der vorbestimmten Anzahl von Fehlversuchen derart, daß danach das Getriebe nur noch manuell schaltbar ist.

Das Steuerungssystem ist mit einem Computer ausgerüstet, sowie mit einem von der Motorgeschwindigkeit abhängigen Steueralgorithmus, der die automatische Getriebesteuerung bestimmt. Der Steueralgorithmus schaltet das System automatisch auf die manuelle Betriebsart um.

Die Erfindung wird nachfolgend anhand schematischer Zeichnungen an einem Ausführungsbeispiel näher erläutert.

Es zeigen:

Figur 1 eine vereinfachte schematische Darstellung der Schnittstelle des Fahrzeuggetriebe-Steuerungssystems nach der Erfindung.

Figur 2 in einem vereinfachten Blockschaltdiagramm die Hardware des Steuerungssystems nach der Erfindung.

Figur 3 in einer detaillierteren schematischen Darstellung einen Abschnitt des neuen Steuerungssystems.

Figur 4 ein schematischer Schaltkreis der Steuerungs-Verriegelungseinrichtung in dem Steuerungssystem.

Figur 5 ein schematischer Kreis der Krafttreibeinrichtung des Steuerungssystems.

Figur 6a bis 6e Fließschemata des Hauptsteueralgorithmus, der bei dem Steuerungssystem nach der Erfindung verwendet wird.

Figur 7, 8a bis 8c und 9a bis 9b Fließschemata von Untersystemen nach dem neuen Steuerungssystem und

Figur 10 ein Signalzeitdiagramm für ausgewählte Signale, die bei Betrieb des neuen Steuerungssystems auftreten.

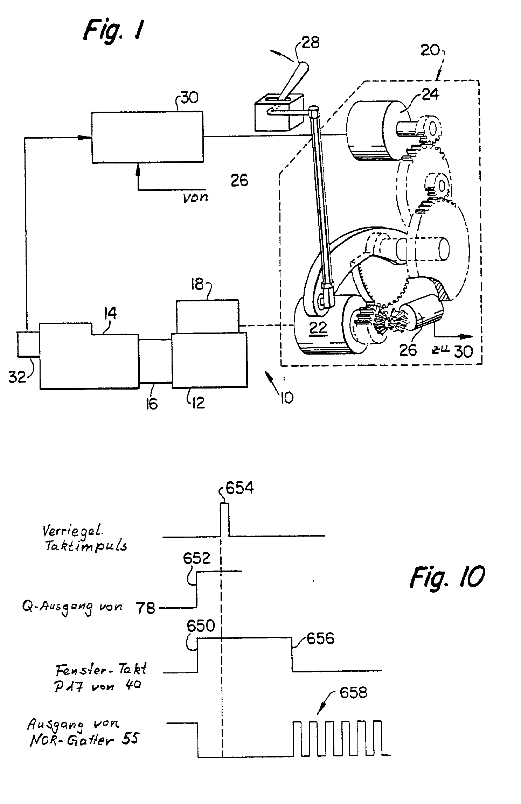

Das Fahrzeuggetriebesteuerungssystem 10 nach Fig. 1 umfaßt ein hydraulisch betätigbares vielgängiges Getriebe 12. Ein Motor 10 treibt das Getriebe 12 über eine übliche Kupplung 16 an. Das Schalten des Getriebes 12 wird durch Schaltventile (Gangschalt-Betätigungseinrichtung) 18 bewirkt, welche durch eine Schnittstelleneinrichtung 20 gesteuert werden. Diese umfaßt ein rotierendes Ventil 22, einen üblichen Vierphasen-Schrittmotor 24 und eine Vier-bit-Getriebekodiereinrichtung (Getriebeübersetzungs-Fühleinrichtung) 26. Diese sind alle durch eine Getriebeverbindungseinrichtung miteinander gekuppelt, welche mit einem durch die Bedienungsperson betätigbaren Gangschalthebel manuell betätigbare Einrichtung 28 verbunden sind.

Der Schrittmotor 24 wird durch eine Getriebekontrolleinrichtung 30 angetrieben, welche Eingangssignale von einer Getriebekodiereinrichtung 26 und von einem magnetischen Aufnahmekopf (Aufnehmer oder Geber) 32 erhält. Dieser erzeugt ein die Motorgeschwindigkeit wiedergebendes Signal durch Fühlen der Bewegung der Zähne eines Zeitgeberzahnrades (nicht gezeigt) des Motors 14.

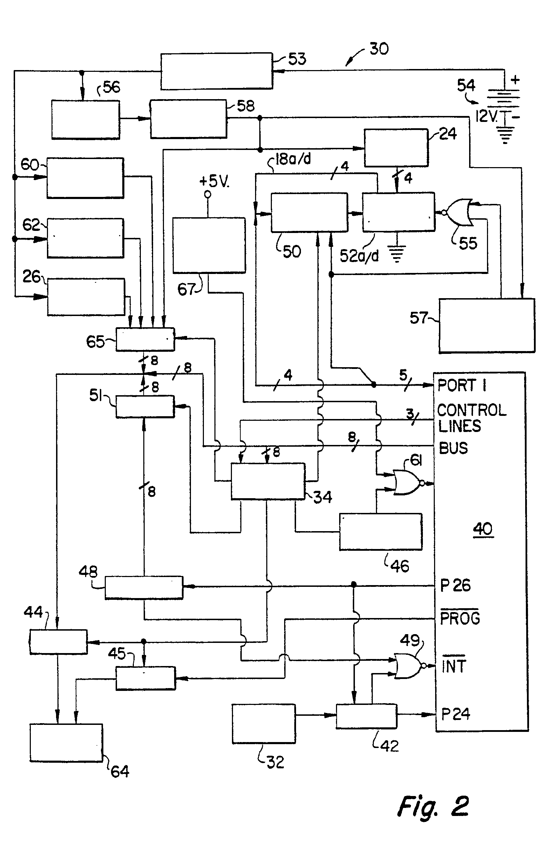

Die hauptsächlichen elektrischen Komponenten des Steuerungssystems sind in einem Blockschaltdiagramm in Figur 2 gezeigt. Die Kontrolleinrichtung 30 umfaßt einen üblichen Mikroprozessor 40. Ein die Motorgeschwindigkeit wiedergebendes Signal wird einem Mikroeingang P24 von dem magnetischen Aufnehmer 32 über eine Verriegelungseinrichtung 42 zugeleitet.

Ein Überwachungszeitgeber 46 wird mit dem Rückstelleingang des Mikroprozessors über ein NOR-Gatter 61 und einen Addressierdekoder 34 gekuppelt. Der Letztere ist außerdem mit ein Mikro-Bus und Steuerleitungen, einer Steuerungsverriegelungseinrichtung 50 und Verriegelungseinrichtungen 44, 45, 51 und 65 gekuppelt. Ein Acht-bit-Zähler 48 ist mit dem Acht-bit-BUS über die Verriegelungseinrichtung 51 sowie mit einem NOR-Gatter 49 und mit ein Mikroeinlaß P26 verbunden. Der Ausgang des NOR-Gatters 49 ist mit einem INT-Eingang des Mikroprozessors 40 verbunden.

Die Spannung von einer Batterie 54 wird durch eine Stromaufbereitungseinrichtung (Konditionierungseinrichtung) 53 konditioniert, welche eine nicht dargestellte Polaritätsumkehrdiode umfaßt, um die Getriebekontrolleinrichtung 30 gegen verkehrte Batterieanschlüsse zu schützen. Außerdem ist eine Begrenzungseinrichtung vorgesehen, um das System gegen Spannungsspitzen über einen Spannungswert von 40 Volt zu schützen. Die Einrichtung 53 ist mit einem Automatisch/Manuell-Schalter (Betriebsart-Auswähleinrichtung) 56 und einem damit in Reihe liegenden Neutralschalter 58 sowie mit einem Parkschalter 60, einem Umkehrschalter 62 und der Getriebekodiereinrichtung 26 verbunden, die parallel zueinander liegen. Auf diese Weise wird die Antriebskraft dem Schrittmotor 24 über die Konditionierungseinrichtung 53 und die Schalter 56 und 58 zugeführt. Ein Satz von vier Kraftantriebseinrichtungen liefert Stromwege für die Speiseströme des Vierphasen-Schrittmotors 24 in Abhängigkeit von Steuersignalen, die den Kraftantriebseinrichtungen über die Steuerungsverriegelungseinrichtung 50 zugeführt werden. Ein Mikro-Einlaß/Auslaß-Zugang 1 (5-bit) ist mit der Steuerungsverriegelungseinrichtung 50 und den Kraftantriebseinrichtungen 52a bis 52d verbunden. Die Getriebekodiereinrichtung 26 und die Schalter 58, 60 und 62 sind mit dem BUS über die Verriegelungseinrichtung 65 verbunden.

Die Schalter 56 bis 62 sind vorzugsweise in einer geeigneten Stellung in der Fahrerkabine montiert. Der Automatisch/Manuell-Schalter 56 ist auf dem Deckel (nicht gezeigt) des Schalthebelquadranten montiert. Der Neutralstellungsschalter 58 ist vorzugsweise auf dem Schaltgestänge in dem Schalthebelquadranten (nicht gezeigt) montiert und wird geöffnet, wenn der Schalthebel 28 sich in seiner Neutralstellung befindet. Der Umkehrschalter 62 ist vorzugsweise auf dem Gehäuse des Drehschaltventils 20 für das Getriebe montiert, während der Parkschalter 60 vorzugsweise auf dem Schaltgestänge in dem Schalthebelquadranten montiert ist. Eine Getriebeanzeigeeinrichtung 64 umfaßt vorzugsweise eine LCD-Anzeigeeinrichtung und ein Reiheneingangs-Parallelausgangsregister (nicht gezeigt), welches die Daten von den Verriegelungseinrichtungen 44 und 45 auf die LCD-Anzeigeeinrichtung überträgt.

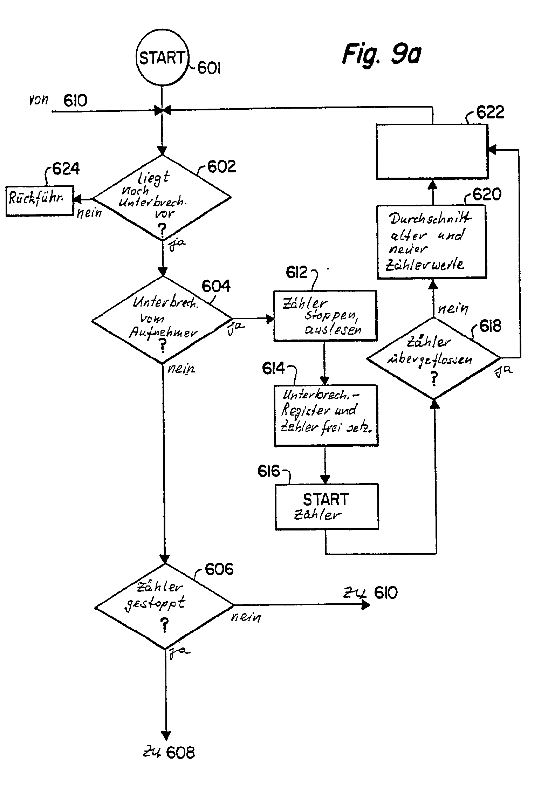

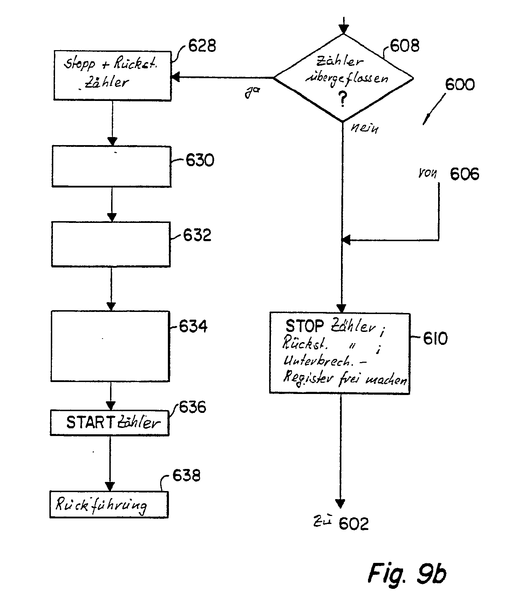

Die Getriebeanzeigeeinrichtung bildet keinen Teil der vorliegenden Erfindung. Impulse, die an dem INT-Zugang des Mikroprozessors 40 anliegen, lösen eine Unterbrechungs-Routinesteuerung aus, welche weiter unten in Bezug auf die Fig. 9a und 9b beschrieben wird.

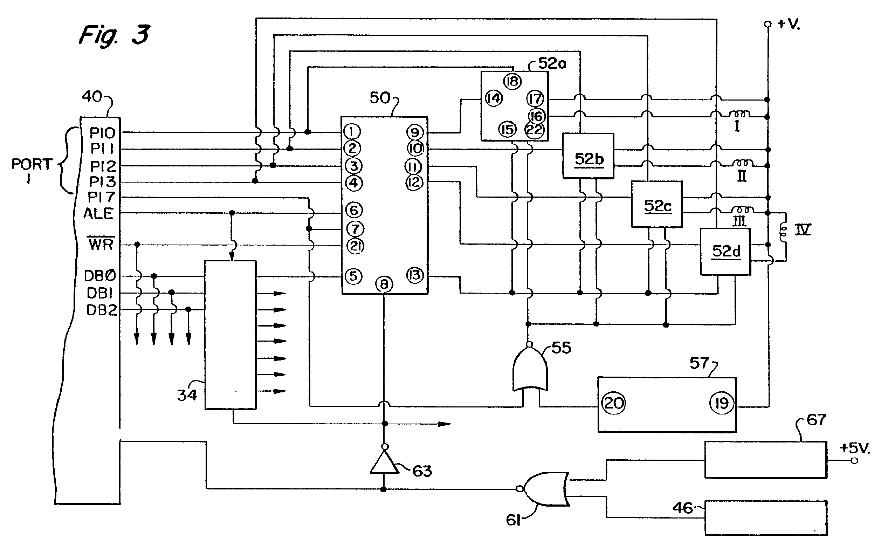

Es wird nunmehr auf Fig. 3 Bezug genommen. Diese zeigt, daß die Mikroprozessor-Eingangs /Ausgangszugänge P10 bis P13 mit der Steuerungsverriegelungseinrichtung 50 sowie mit jeder der vier Kraftantriebseinrichtungen 52a bis 52d verbunden sind. Der ALE-Ausgang des Mikroprozessors 40 liefert ein Zeitsignal von 239 KHz an die Steuerungsverriegelungseinrichtung 50 und an den üblichen Addressierdekoder 34, um den Zeittakt für das System vorzugeben. Der Zugang P17 für den Mikroprozessor liefert Signale zur Auslösung eines "Befehlsverriegelungsfensters" und liefert ein die Impulsweitenmodulation unterbindendes Signal an das NOR-Gatter 55.

Die Steuerungsverriegelungseinrichtung 50 ist mit jeder der Kraftantriebseinrichtungen 52a bis 52d verbunden. Jede dieser Antriebseinrichtungen ist mit der Batteriespannung +V und mit den vier Phasen I bis IV des Schrittmotors 24 verbunden. Die Batteriespannung liegt außerdem an ein Impulsweiten-Modulationseinrichtung 57 an, welche ein der Impulsweite nach moduliertes Signal liefert, und zwar mit einem Wiederholungszyklus, der umgekehrt proportional der Größe der Spannung +V ist, um so einen konstanten durchschnittlichen Strom an den Phasenwicklungen des Schrittmotors aufrechtzuerhalten, und zwar unabhängig von Schwankungen in der Batteriespannung +V. Der Ausgang des Impulsweiten-Modulators 57 wird an jede der Kraftantriebseinrichtungen 52a bis 52d über das NOR-Gatter 55 weitergeleitet, und zwar nur dann, wenn das von dem Zugang P17 des Mikroprozessors kommende Signal einen niedrigen Wert hat.

Das NOR-Gatter 61 und die Umkehreinrichtung 63 liefern Signale für die Steuerungsverriegelungseinrichtung 50 und an den Rückstellanschluß des Mikroprozessors 40, so daß die Ausgänge 9 bis 12 der Steuerungsverriegelungseinrichtung 50 für die Kraftantriebseinrichtungen einen niedrigen Wert annehmen, um die Kraftantriebseinrichtungen 52a bis 52d abzuschalten jedesmal dann, wenn eine 5-Volt-Regeleinrichtung eine Spannung liefert die niedrig ist, oder jedesmal, wenn die Zeitgebereinrichtung eine Zeitphase beendet. Der Rückstellkreis 67 von niederiger Spannung umfaßt einen 8212-Spannungs-Detektor (nicht gezeigt), der mit einem Einstell/Rückstell-Flip-Flop (nicht gezeigt) verbunden ist, so daß der Letztere den Mikroprozessor im rückgestellten Zustand hält, wenn die geregelte Spannung niedrig ist, und nach Ablauf einer vorbestimmten Zeit danach in den normalen Zustand zurückkehrt.

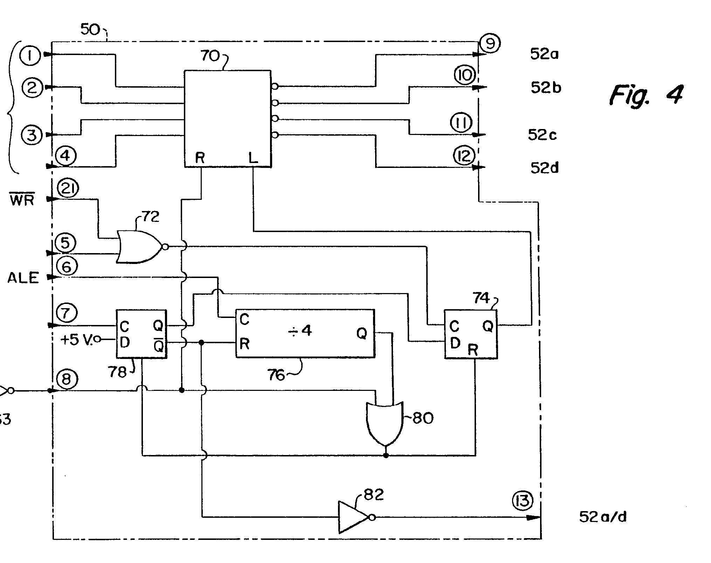

Es wird nun Bezug genommen auf Fig. 4. Diese zeigt, daß die Steuerungsverriegelungseinrichtung als 4. Verriegelungseinrichtung 70 in den Kreis eingeschaltet ist, welche die Antriebskommandos für den Schrittmotor von den Einlaß/Auslaß-Zugängen P10 bis P13 des Mikroprozessors erhält. Die Ausgänge der Verriegelungseinrichtung 70 sind mit den jeweiligen Eingängen der Kraftantriebseinrichtungen 52a bis 52d verbunden. Ein NOR-Gatter 72 kuppelt das WR-Mikroprozessorsignal und ein Verriegelungs-Steuersignal von der Addressier-Dekodiereinrichtung 34 mit dem Zeitgebereingang C einer "D-Verriegelungseinrichtung" 74 der ALE-Mikroprozessor-Ausgang ist mit dem Zeitgebereingang eines 4-Teiler-Zählers 76 verbunden. Der Ausgang P17 des Mikroprozessors ist mit dem Zeitgebereingang einer anderen "D-Verriegelungseinrichtung" 78 verbunden. Die Steuerungsverriegelungseinrichtung 50 umfaßt ein OR-Gatter 80, das mit der Umkehreinrichtung 63, der Verriegelungseinrichtung 70, dem Zähler 76 und den D-Verriegelungseinrichtungen 74 und 78 in der gezeigten Weise verbunden ist. Schließlich umfaßt die Steuerungsverriegelungseinrichtung 50 eine Umkehreinrichtung 82, welche von dem Q-Ausgang der D-Verriegelungseinrichtung 78 ein Rückstell-Sperrsignal erzeugt.

Die Steuerungsverriegelungseinrichtung 50 arbeitet wie folgt:

Es wird angenommen, daß Antriebsbefehle für den Schrittmotor an den Einlaß/Auslaß-Zugängen P10 bis P13 des Mikroprozessors anliegen. Der Mikroprozessor 40 sendet als nächstes ein "Fensterkommando"-Impuls an die D-Verriegelungseinrichtung 78, welche den Q-Ausgang der Einrichtung 78 und den D-Eingang der Einrichtung 74 auf hohe Werte umschaltet und so ein "Fenster" öffnet. Wenn dann ein "Verriegelungs-Takt"-Impuls an das NOR-Gatter 72 angelegt wird, gehen der Q-Ausgang der Verriegelungseinrichtung 74 und der L-Eingang der Verriegelungseinrichtung 70 zu hohen Werten über, so daß die Verriegelungseinrichtung 70 die Antriebsbefehle für die Schrittmotore an die jeweiligen Kraftantriebseinrichtungen 52a bis 52d weiterleitet.

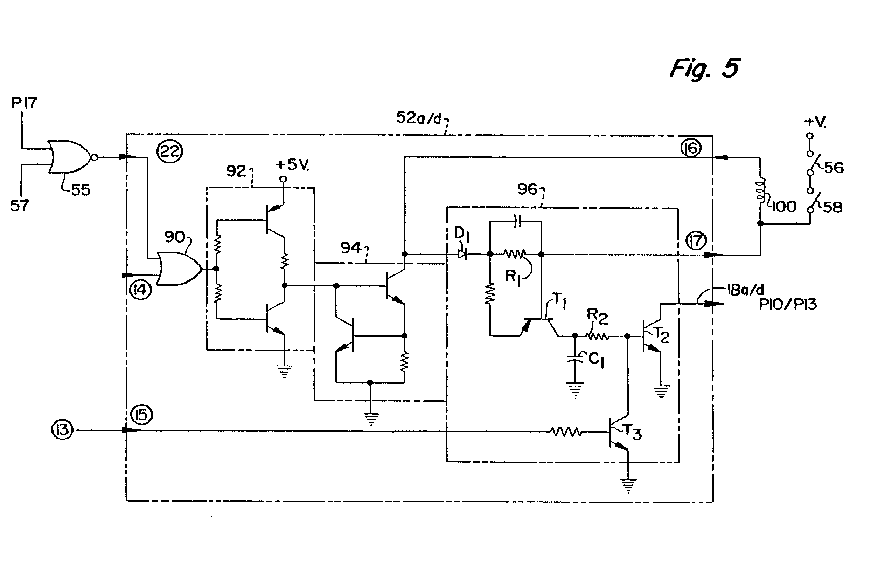

Es wird nun auf Fig. 5 Bezug genommen. Dort ist ersichtlich, daß jede Kraftantriebseinrichtung 52a bis 52d ein OR-Gatter 90 umfaßt, deren Eingänge mit dem Ausgang eines NOR-Gatters 55 und mit jeweils einem korrespondierenden Treiberausgang 9 bis 12 der Steuerungsverriegelungseinrichtung 50 gekuppelt sind. Der Ausgang des OR-Gatters 90 ist mit einem üblichen Vollwellen-Antriebsverstärker 92 verbunden. Der Ausgang des Verstärkers 92 ist mit einem üblichen Krafttreiber 94 mit Strombegrenzung verbunden. Der Ausgang des Treibers 94 ist jeweils mit einer Wicklung I bis IV oder Phase, wie bei 100 angedeutet, des Schrittmotors verbunden. Jede Kraftantriebseinrichtung 52a bis 52d umfaßt ebenfalls einen "Rückstell"-Fühlerkreis 96, der die Einlaß/Auslaß-Zugänge P10 bis P13 des Mikroprozessors mit Erde verbindet, jedesmal wenn die Phasen des Schrittmotors angetrieben werden.

Im Betrieb wird die Schrittmotorphase 100 in kontinuierlicher oder in impulsartiger Weise angetrieben aufgrund des der Impulsweite nach modulierten Signals, das dem OR-Gatter 90 über das NOR-Gatter 55 zugeführt wird. Wenn der Treiber 94 abschaltet, fließt ein induktiver Rückstellstrom durch Diode 1 und Widerstand R1, wodurch der Transistor T1 eingeschaltet wird und den Kondensator C1 auflädt. Die Spannung über dem Kondensator C1 schaltet den Transistor T2 ein, so daß die Einlaß/Auslaß-Zugänge P10 bis P13 des Mikroprozessors geerdet werden. Der Kondensator C1 und der Widerstand R2 stellen sicher, daß der Transistor T2 kontinuierlich eingeschaltet ist, statt daß er intermittierend eingeschaltet wird, immer dann, wenn die Motorphasen 100 impulsmäßig betätigt werden. Der Erdungszustand der Zugänge P10 bis P13 zeigt dem Mikroprozessor 40 an, daß die Schrittmotorphasen ordnungsgemäß gespeist werden. Nachdem die Motorphasen eingeschaltet sind, sorgt ein die Rückstellung verhinderndes Signal für die Einschaltung des Transistors T3, der seinerseits den Transistor T2 ausschaltet. Dies beendet die Feststellung der Rückstellung und gestattet, daß neue Antriebskommandosignale für den Schrittmotor an den Zugängen P10 bis P13 erscheinen.

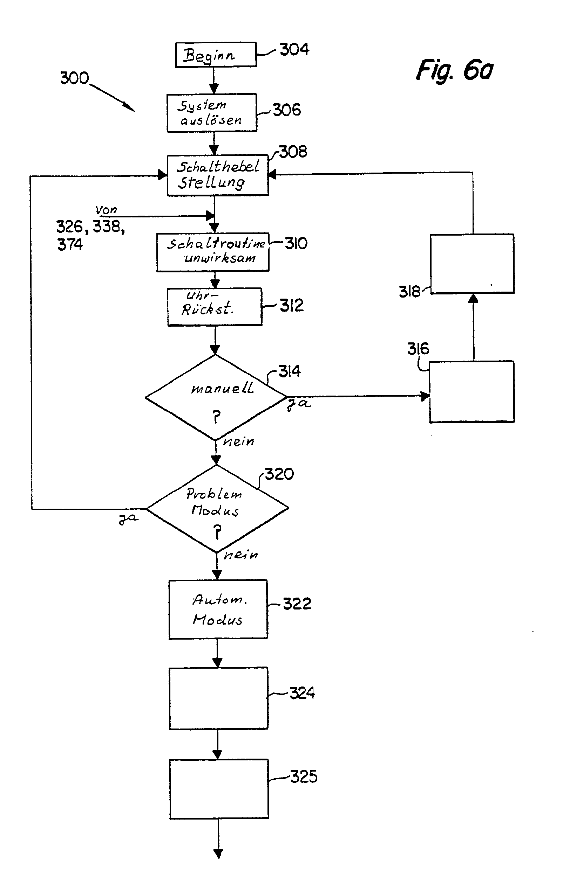

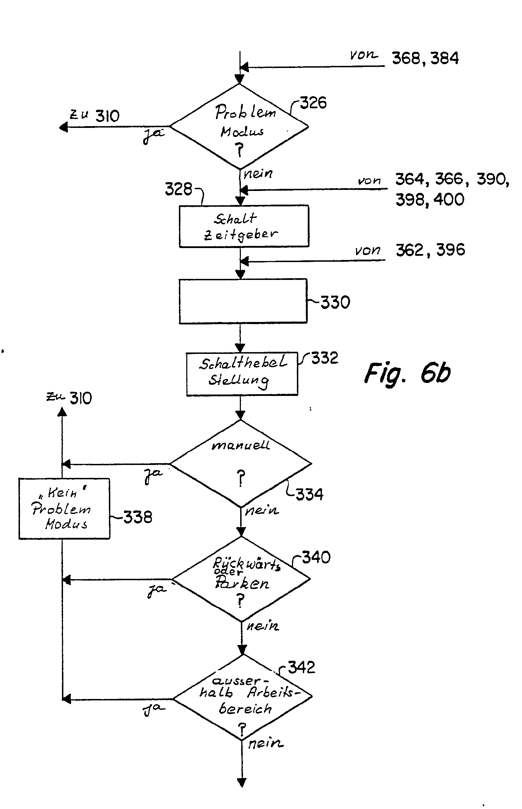

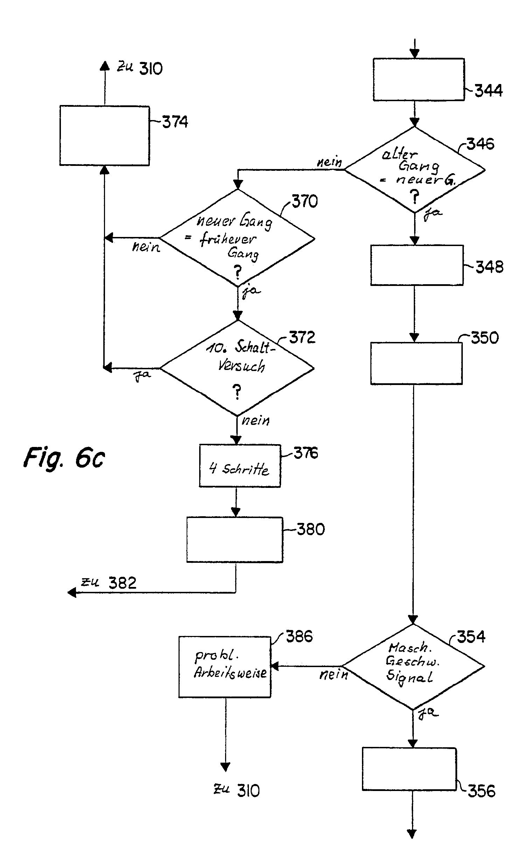

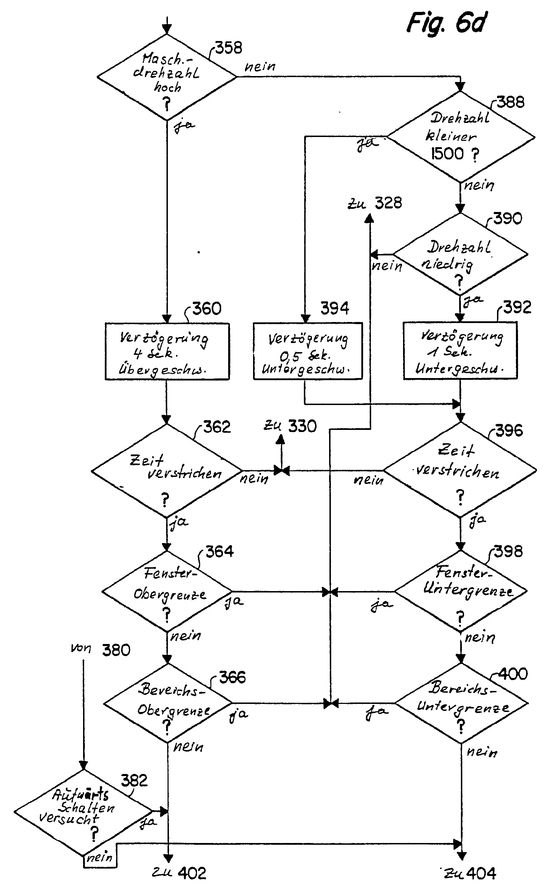

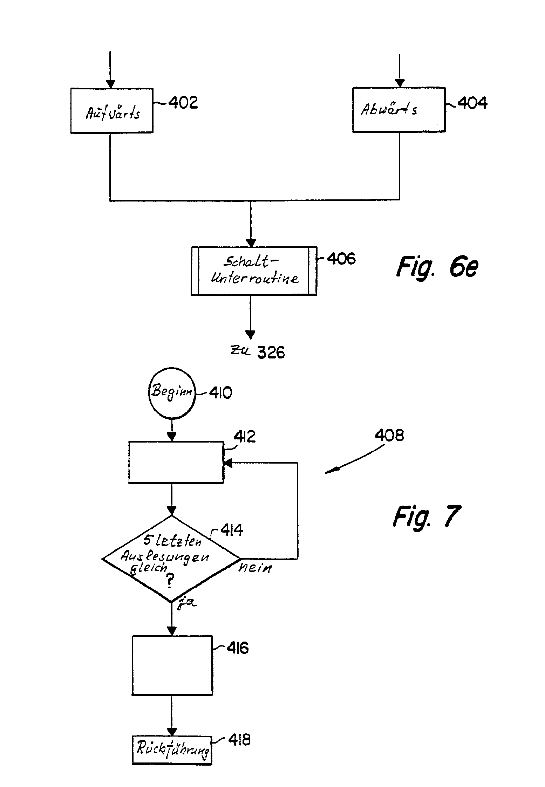

Die Getriebkontrolleinrichtung 30 kontrolliert das Getriebe 12 gemäß einem Hauptsteueralgorithmus sowie gemäß Unterprogrammen, die durch den Mikroprozessor 40 ausgeführt werden. Diese sind in den Fließschemata der Figuren 6a bis 6e, 7, 8a bis 8c und 9a und 9b dargestellt.

Der Hauptalgorithmus 300 beginnt bei Schritt 304, worauf bei Schritt 306 alle Zähler auf Null gestellt und die Register ausgelöst werden. Danach wird in einen Nebenschritt 408 zum Lesen der Schalthebelstellung, welcher Schritt später detailliert in Bezug auf Fig. 7 beschrieben wird, über den Schritt 308 eingetreten. In dieser Nebenphase werden die 8-bits des BUS geprüft und binäre Zahlen repräsentieren den Zustand der Schalter 56 bis 62 und die Stellung des Gangschalthebels 28. Bei Schritt 310 wird eine Zahl in ein Zweigregister (nicht gezeigt) eingebracht, so daß die Arbeitsweise des Schaltalgorithmus 500 verhindert wird, sofern nicht die Schritte 380 oder 356 Gültigkeitszahlen in die Zweigregister unter bestimmten Spezifizierten Bedingungen einbringen, die weiter unten beschrieben werden. Bei Schritt 312 wird der Überwachungszeitgeber zurückgestellt. Das bedeutet, daß wenn der Zyklus oder der Algorithmus ordnungsgemäß arbeitet, der Zeitgeber vor seinem Ablauf stets zurückgestellt wird. Der Schritt 314 leitet den Algorithmus zu Schritt 316, wenn der Automatisch/Manuell-Schalter 56 sich in der manuellen Stellung befindet. Andernfalls schreitet der Algorithmus weiter zu Schritt 320.

In Schritt 316 wird der vorliegende Gang des Getriebes 12, wie er durch die Getriebekodiereinrichtung 26 angezeigt wird, als die oberste Übersetzungsstufe eines Viergang-Fensters eingestellt, über den hinaus die Kontrolleinrichtung das Getriebe 12 nicht schalten darf. In Stufe 318 wird ein "problematische Betriebsweise"-Register, das weiter unten beschrieben wird, freigemacht. Der Algorithmus kehrt dann zurück zu dem zuvor beschriebenen Schritt 308. Dieser Bereich des Algorithmus umfaßt die algorithmischen Stufen, die wirksam sind, wenn das Getriebe 12 unter manueller Kontrolle steht, und zwar aufgrund der Einschaltung des Schalters 56 in die Handbetätigungsstellung, welche den Schrittmotor 24 von der Batterie abschaltet.

Wenn die Bedienungsperson jedoch den Automatisch/Manuell-Schalter 56 schließt und damit den Kreis zwischen der Batterie 54 und dem Schrittmotor 24 schließt, schreitet der Algorithmus von Schritt 314 zu Schritt 320 fort, wodurch der Algorithmus zurück zu Schritt 308 geführt wird. Dabei wird jede automatische Schaltung verhindert, wenn irgend ein Wert bezüglich einer problematischen Arbeitsweise in dem entsprechenden Register vorliegt, und zwar aufgrund der Betätigung der später zu beschreibenden Stufen 338, 384, 386 oder 532.

Die Schritte 308 bis 320 zusammen mit den Schritten 370 und 374 (die später beschrieben werden) veranlassen das Steuerungssystem wie folgt zu arbeiten:

Es wird angenommen, daß das Steuerungssystem sich in der automatischen Betriebsweise befindet, da der Automatisch /Manuell-Schalter 56 sich in der automatischen Stellung befindet. Es wird weiter angenommen, daß die Bedienungsperson den Schalthebel 28 verstellt. Diese Bewegung wird festgestellt und es wird eine "problematische Arbeitsweise" durch die Schritte 370 und 374 eingestellt und der Ablauf tritt ein in die "manuelle Schleife" bei Schritt 310. Der Ablauf verbleibt in dieser "manuellen Schleife" solange wie der Automatisch /Manuell-Schalter 56 nicht aufgrund der Schritte 374 und 320 geändert wird. Um in die automatische Arbeitsweise zurückkehren zu können muß die Bedienungsperson den Schalter 56 in die Handbetätigungsstellung umschalten, so daß der Schritt 314 den Ablauf zu Schritt 318 führt, um die "problematische Arbeitsweise" zu beseitigen, welche durch den Schritt 374 ausgelöst worden war. Wenn danach der Schalter 56 wieder in die automatische Stellung zurückgeführt wird, gestatten die Schritte 314 und 320 den Ablauf aus der manuellen Schleife auszutreten und zu der automatischen Arbeitsweise zurückzukehren. Dies gestattet es der Bedienungsperson eine Notfall-Herabschaltung auszuführen, um den Motor zu Bremszwecken zu benutzen, und zwar einfach durch Bewegen des Schalthebels, ohne daß eine Störung durch die automatische Betriebsweise der Kontrolleinrichtung stattfindet. Es wird außerdem verhindert, daß das Steuerungssystem in die automatische Betriebsweise zurückkehrt, sofern nicht die Bedienungsperson bewußt vorher den Schalter 56 umgeschaltet hat. Bei Schritt 322 wird ein Zeitgeber/Zähler (nicht gezeigt) in den Stand gesetzt, Zeitgeberimpulse zu zählen, so daß die Zeitintervalle zwischen Schaltvorgängen gemessen werden können. Beim nächsten Schritt 324 wird der Wert "alter Schaltzustand" gleichgesetzt dem gegenwärtigen Übersetzungsverhältnis. Im Schnitt 325 wird danach das gegenwärtige Übersetzungsverhältnis bestimmt und es werden Aufwärtsschalt- und Abwärtsschalt-Motorgeschwindigkeitswerte für dieses Übersetzungsverhältnis wie folgt festgelegt:

Für alle Gänge, einschließlich der Neutralstellung, jedoch mit der Ausnahme des achten Ganges, beträgt die Aufwärtsschaltgeschwindigkeit 2206 U/Min., während die Herabschaltgeschwindigkeit bei 1896 U/Min. liegt. Für den 8. Gang wird die Aufwärtsschaltgeschwindigkeit auf 2206 U/Min. und die Abwärtsschaltgeschwindigkeit auf 1857 U/Min. festgelegt. Diese Werte sind lediglich beispielshaft angegeben und es sollte festgehalten werden, daß andere Motorgeschwindigkeitswerte ebenfalls genügen können.

Bei dem nächsten Schritt 326 wird der Algorithmus zu Schritt 310 geleitet, wenn irgend ein Problemwert in dem entsprechenden Register vorliegt. Sonst schaltet der Algorithmus weiter zu Schritt 328. Hier wird ein Schaltzeitgeber freigesetzt und ausgelöst, so daß der Zeitintervall zwischen aufeinanderfolgenden Schaltvorgängen bestimmt werden kann. Bei Schritt 330 wird ein Nichtgültigkeitswert erneut in das Zweigregister eingebracht, genauso wie dies bei Schritt 310 zuvor beschrieben worden ist. Es wird dann in das Unterprogramm zum Auslesen der Stellung des Schalthebels über Schritt 332 eingetreten, wobei die Stellung des Schalthebels 28 erneut von der Getriebekodiereinrichtung 26 bestimmt wird.

Der Schritt 334 leitet dann den Algorithmus zu Schritt 310, wenn die Bedienungsperson eine manuelle Betätigung über den Schalter 56 gefordert hat. Sonst schreitet der Algorithmus fort zu Schritt 340. Wenn die Umkehr- oder Parkschalter 62 und 60 geschlossen sind, leitet der Schritt 340 den Algorithmus weiter zu Schritt 338, bei dem das Register über problematische Arbeitsweise auf einen Wert eingestellt wird, der aufgrund von Schritt 326 eine automatische Arbeitsweise verhindert, wonach der Algorithmus zu Schritt 310 für die Handbetätigung zurückkehrt. Ansonsten schreitet der Algorithmus weiter zu Schritt 342, der den Algorithmus auch an die Schritte 338 und 310 weiterleitet, wenn das Getriebe sich außerhalb des Arbeitsbereiches befindet, welches bevorzugt bestimmt wird als die Übersetzungsverhältnisse 4 bis 10. Ansonsten schreitet der Algorithmus fort zu Schritt 344, wo der Überwachungszeitgeber zurückgestellt wird, wie dies zuvor bei Schritt 312 beschrieben worden ist. Dieser Arbeitsbereich verhindert, daß das Getriebe im automatischen Betriebszustand zu einem zu hohen Gang geschaltet wird.

Wenn bei Schritt 346 der Wert "altes Übersetzungsverhältnis" gleich ist dem Wert des neuen "Übersetzungsverhältnisses", was der Fall ist, wenn der Schalthebel 28 nicht bewegt worden ist oder wenn der vorangegangene Schaltvorgang ordnungsgemäß vollendet und das Signal von der Getriebekodiereinrichtung 26 entsprechend verändert worden ist, schreitet der Algorithmus weiter zu Schritt 348. Andernfalls wird der Algorithmus zu Schritt 370 geleitet, wie dies weiter unten beschrieben wird. Bei Schritt 348 wird der laufende Gangschaltwert dem Register für das "alte Übersetzungsverhältnis" bestimmt. Bei Schritt 350 wird die Gangschaltroutine festgesetzt auf 40 Schritte pro Kommando, wobei 40 Schritte des Schrittmotors die Zahl der Schritte ist, die erforderlich ist, um einen Gangwechsel durch den Schrittmotor 24 zu vollziehen.

Danach wird eine Gültigkeitskontrolle durch Schritt 354 ausgeführt, wodurch der Algorithmus zu Schritt 356 geleitet wird, wenn ein ordnungsmäßiges Signal erzeugt wird durch den magnetischen Aufnehmer 32 für die Maschinengeschwindigkeit und durch den, wenn kein solches ordnungsgemäßes Signal erzeugt wird, der Algorithmus zu Schritt 386 geleitet wird, wo ein Wert für eine "problematische Arbeitsweise" erzeugt wird. Danach wird der Algorithmus wie zuvor beschrieben zu Schritt 310 geleitet. Diese Gültigkeitskontrolle kann durch Prüfen des Zählwertes in einem nicht gezeigten Überstromregister ausgeführt werden, welches die Anzahl von Malen zählt, die der Maschinengeschwindigkeitszähler 48 überströmt. Bei Schritt 356 wird ein "Einschaltcode" oder ein "Kennwort" in das Einschaltregister eingebracht, so daß eine Schaltunterroutine ausgeführt werden kann, wie sie später beschrieben wird.

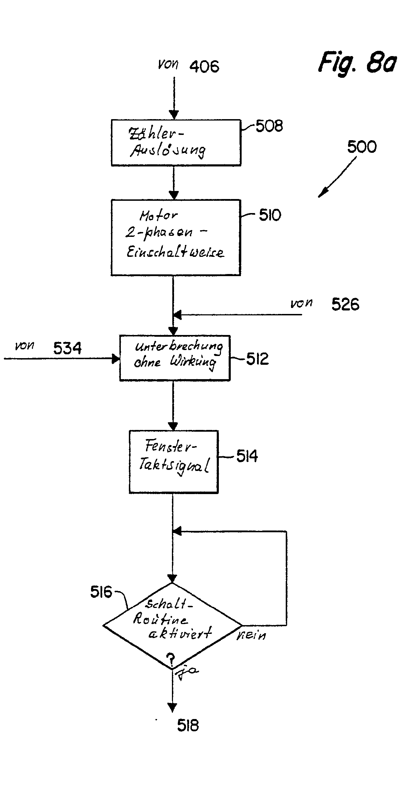

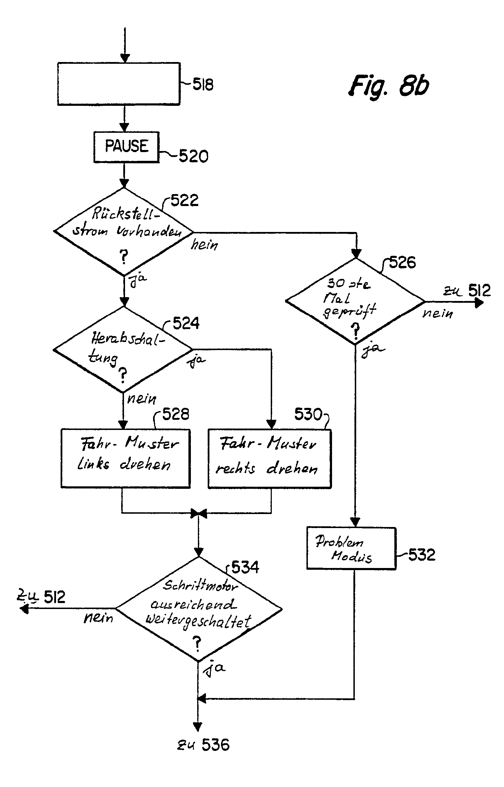

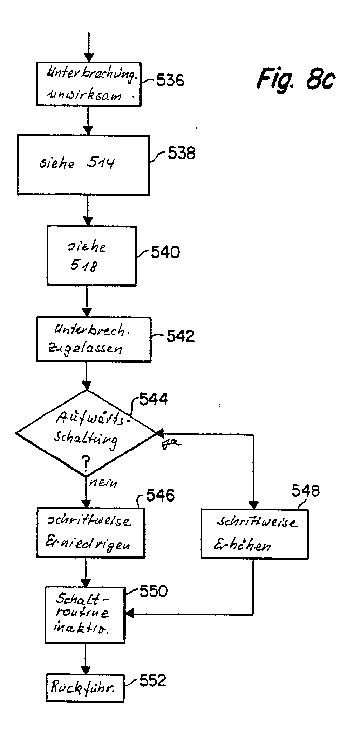

Der Schritt 358 vergleicht die Drehzahl des Motors, die durch den Geber 32 festgestellt wird mit der Aufwärtsschaltgeschwindigkeit des laufenden Übersetzungsverhältnisses, wie dies in der Übersichtstabelle vorgesehen ist, die im vorangegangenen Schritt 325 überprüft worden ist. Wenn die Motordrehzahl nicht höher als die Aufwärtsschaltgeschwindigkeit ist, die in dem Schritt 325 festgelegt ist, dann wird der Algorithmus zu Schritt 388 weitergeleitet. Ansonsten wird der Algorithmus zu Schritt 360 fortschreiten, wo eine Übergeschwindigkeitsverzögerungsspanne von beispielsweise 4 Sek. zur Wirkung bebracht wird. Der Schritt 362 führt dann den Algorithmus zurück zu Schritt 330 und verhindert so eine Aufwärtsschaltung, sofern nicht diese 4 Sek. Verzögerungszeit abgelaufen ist. Somit wird eine Aufwärtsschaltung nicht zugelassen, es sei denn, der Übergeschwindigkeitszustand dauert länger als wenigstens 4 Sekunden. Die Schritte 364 und 366 verhindern Aufwärtsschaltungen durch Rückführung des Algorithmus zu Schritt 328, wenn das laufende Übersetzungsverhältnis das gleiche ist, wie der oberste Gang des in Schritt 316 geschaffenen Schaltfensters oder wenn das laufende Übersetzungsverhältnis sich außerhalb des zuvor beschriebenen Arbeitsbereiches, beispielsweise der Gänge 4 bis 10, befindet. Wenn keiner dieser Bedingungen genüge geleistet ist, wird der Algorithmus weitergeleitet zu Schritt 402, wo die Schaltrichtung für eine Aufwärtsschaltung eingestellt wird. Nach Schritt 402 wird über Schritt 406 eine Schalt-Unterroutine eingeschaltet. Nach Ausführen dieses Schaltzweiges kehrt der Algorithmus zurück zu Schritt 326. Die Schaltunterroutine wird weiter unten im einzelnen im Zusammenhang mit den Fig. 8a bis 8c beschrieben. Kurz gesagt erzeugt die Schaltunterroutine Befehle, die über die Steuerungsverriegelungseinrichtung 50 und die Kraftantriebseinrichtungen 52 den Schrittmotor 24 und das Vorsteuerventil 22 in Drehung versetzen, um die Schaltventile 18 zu veranlassen, das Getriebe 12 in den nächsten geeigneten Gang umzuschalten.

Es wird nun zurückgegangen zu Schritt 346. Wenn der Wert "des alten Übersetzungsverhältnisses" nicht der gleiche ist wie der des "neuen Übersetzungsverhältnisses" schreitet der Algorithmus fort zu Schritt 370. Dieser führt ihn zu Schritt 372, wenn das "neue Übersetzungsverhältnis" das gleiche ist wie das Übersetzungsverhältnis, in das das Getriebe eingeschaltet war in dem vorletzten Schaltvorgang. In diesem Fall kann angenommen werden, daß ein Schaltvorgang versucht, aber nicht erfolgreich vollendet worden ist. Sonst leitet Schritt 370 den Algorithmus zu Schritt 374. In diesem Fall kann angenommen werden, daß der Gangschalthebel 28 durch die Bedienungsperson bewegt worden ist. In dem Fall, wo ein Schaltvorgang versucht, aber nicht vollendet worden ist, leitet Schritt 372 den Algorithmus zu Schritt 376, sofern es sich nicht um den zehnten Versuch zum Umschalten in das "neue Übersetzungsverhältnis" handelt. Hierauf wird der Algorithmus zu Schritt 374 geleitet. Dieser Schritt erzeugt einen Wert für einen "Fehlversuch"-Problemzustand und leitet den Algorithmus zurück zu Schritt 310. Das bedeutet, daß die Schritte 370 bis 374 den Algorithmus zu Schritt 310 für eine manuelle Steuerung umleiten, wenn der Gangschalthebel 28 durch die Bedienungsperson bewegt worden ist, wenn die Getriebekodiereinrichtung 26 versagt hat oder wenn ein Schaltvorgang zehnmal hintereinander erfolglos probiert worden ist.

Der Schritt 376 stellt die Gangschaltroutine auf vier Schritte des Schrittmotors durch Kommando ein, so daß 40 Schritte durch zehn Anstöße über diesen Bereich des Algorithmus befohlen werden. Bei Schritt 380 wird ein "Einschaltcode" oder "Kennwort" in das "Einschaltregister" eingebracht, so daß der Schaltalgorithmus 500 ausgeführt wird, wie dies später beschrieben wird. Danach leitet Schritt 382 den Algorithmus zu dem Einstellschritt 402 für eine Aufwärtsschaltung oder für den Einschaltschritt 404 für eine Abwärtsschaltung. Der Algorithmus wird dann zu einer Schaltunterroutine über Schritt 406 geleitet, so daß eine entsprechende Aufwärts- oder Abwärtsschaltung erneut versucht wird.

Es wird nun zurückgekehrt zu Schritt 358. Wenn dieser den Algorithmus zu Schritt 388 aufgrund der Tatsache geleitet hat, daß die Motordrehzahl nicht höher ist als die entsprechende Aufwärtsschaltgeschwindigkeit wie sie in der Tabelle festgelegt ist, wird die Maschinendrehzahl mit dem Wert 1500 U/Min. in Schritt 388 verglichen. Wenn die Motordrehzahl kleiner ist als 1500 U/Min., was z. B. der Fall ist, wenn der Motor beim Abwürgen ist, dann schreitet der Algorithmus fort zu Schritt 394. Dort ist eine Verzögerungserfordernis für Untergeschwindigkeit eingestellt auf 0,5 sec., wonach der Algorithmus weiter zu Schritt 396 geleitet wird. Wenn die Motordrehzahl nicht geringer ist als 1500 U schreitet der Algorithmus fort von Schritt 388 zu Schritt 390. Dort wird er verglichen mit der entsprechenden Abwärtsschaltgeschwindigkeit, die in der Tabelle festgelegt ist. Wenn die Motorgeschwindigkeit nicht niedriger ist als die Abwärtsschaltgeschwindigkeit, ist ein Schaltvorgang nicht erforderlich und der Algorithmus kehrt zurück zu Schritt 328. Wenn jedoch die Motordrehzahl niedriger als die Abwärtsschaltgeschwindigkeit ist, schreitet der Algorithmus fort zu Schritt 392. Dort wird ein Erfordernis für eine Untergeschwindigkeitsverzögerung auf 1,0 sek. eingestellt, wonach der Algorithmus zu Schritt 396 fortschreitet.

Der Schritt 396 leitet den Algorithmus zu Schritt 330 zurück, wenn das Verzögerungserfordernis in Schritt 392 oder 394 nicht ausgeschöpft ist. Ansonsten wird der Algorithmus weitergeschaltet zu Schritt 398. Dieser leitet den Algorithmus zurück zu Schritt 328, wenn das gegenwärtige Übersetzungsverhältnis das gleiche ist wie das unterste Übersetzungsverhältnis (drei Übersetzungsstufen unterhalb des obersten Übersetzungsverhältnisses) von dem "Schaltfenster", das in Stufe 316 geschaffen worden ist. Ansonsten schreitet der Algorithmus fort zu Schritt 400. Dieser leitet den Algorithmus weiter zu Schritt 328, wenn das laufende Übersetzungsverhältnis das gleiche ist wie das unterste Übersetzungsverhältnis des zuvor beschriebenen "Arbeitsbereiches" der Gänge. Ansonsten schreitet der Algorithmus fort zu Schritt 404, wo die Schaltrichtung für eine Abwärtsschaltung festgelegt wird. Von Schritt 404 wird die Schaltunterroutine wie von Schritt 402 über Schritt 406 ausgelöst, wonach der Algorithmus zu Schritt 326 zurückkehrt.

Die zum Auslösen der Stellung des Schalthebels dienende Unterroutine 408 wird über Schritt 308 und 332 des Hauptalgorithmus 300 erreicht und wird nun mit Bezug auf Fig. 7 beschrieben. Die Unterroutine 408 wird über Stufe 410 erreicht, wonach in Schritt 412 die 8 bit von dem BUS-Zugang des Computers ausgelesen werden. Dies umfaßt die 4-Bit-Codesignale, welche den Zustand der Getriebekodiereinrichtung 26 repräsentiert. Danach leitet der Schritt 414 die Unterroutine zurück zu Schritt 412, sofern nicht dort eine Veränderung bei den letzten fünf Auslesungen aus der Kodiereinrichtung 26 vorliegt. In Schritt 416 wird die graue Kodiernummer, welche die Stellung der Kodiereinrichtung 26 repräsentiert in eine binäre Zahl umgewandelt. Schritt 418 führt die Unterroutine zum Hauptalgorithmus zur Ausführung der Schritte 310 oder 334 zurück. Auf diese Weise wird der Zustand der Kodiereinrichtung 26 erneut geprüft vor jedem manuellen oder automatischen Schaltvorgang und jedesmal, wenn der Hauptalgorithmus 300 ausgeführt wird.

Die Schaltunterroutine 500, in die über Schritt 406 des Hauptalgorithmus 300 eingetreten wird, wird nun mit Bezug auf die Figuren 8a bis 8c beschrieben. Als erstes löst der Schritt 508 einen "Rückstell"-Zähler aus, so daß die Kontrolleinrichtung die Zahl der aufeinanderfolgenden Male feststellen kann, die eine der Kraftantriebseinrichtungen für den Schrittmotor eingeschaltet worden ist, ohne eine Anzeige von dem Rückstellfühlkreis 96, daß die Einrichtung eingeschaltet worden ist. Außerdem wird ein "Schleifen" Zähler aufgeladen mit einem Wert, der die Zahl der Schritte des Schrittmotors wiedergibt, welche durch einen der Schritte 350 oder 372 des Hauptalgorithmus 300 verwirklicht worden ist.

Als nächstes wird bei Schritt 510 ein Register auf einen entsprechenden Wert gebracht, so daß der Schrittmotor 24 in einer üblichen Zweiphaseneinschaltweise eingeschaltet wird. Außerdem wird ein "Nichtberücksichtigen"-Maskenregister eingestellt, so daß die Kontrolleinrichtung Rückstellsignale von den zuletzt eingeschalteten Antriebseinrichtungen für den Schrittmotor ignoriert.

Als nächstes wird bei Schritt 512 sichergestellt, daß Unterbrechungen wirkungslos bleiben, um zu verhindern, daß unerwünschte Unterbrechungen während der Unterroutine für den Schaltvorgang durch die Unterbrechungsroutine, wie sie weiter unten beschrieben wird, zu verhindern.

Als nächstes wird bei Schritt 514 das Fenstertaktsignal, welches bei P17 am Mikroprozessor 40 auftritt und welches dann zu Teil 7 der Steuerungsverriegelungseinrichtung 50 geleitet wird, auf den Wert Logisch-1 gebracht, wie bei 650 des Wellenformdiagramms der Fig. 10. Dies führt dazu, daß der Q-Ausgang der D-Verriegelungseinrichtung 78 zum hohen Wert umspringt, wie bei 652, so daß ein Zeit-"Fenster" geöffnet wird, währenddessen Signale durch die Verriegelungseinrichtung 70 zu den Kraftantriebseinrichtungen 52a bis 52d gelangen können.

Bei Schritt 516 wird abgefragt, ob die Schaltroutine durch die Schritte 310, 330, 356 oder 380 der Hauptschleife "aktiviert" oder "disaktiviert" worden ist. Wenn sie nicht aktiviert ist, läuft der Schritt 506 wiederholt zurück und der Überwachungszeitgeber 46 läuft ggf. aus und der Algorithmus wird aufgrund der Hardware-Ausbildung an den Beginn der Hauptschleife 300 zurückgeleitet.

Wenn die Schaltroutine aktiviert worden ist, schaltet die Routine fort zu Schritt 518, wodurch ein "Verriegelungstakt"-Impuls erzeugt wird, wie bei 654 der Figur 10. Dieser wird zu dem Eingang 5 der Steuerungsverriegelungseinrichtung 50 geleitet. Dies führt dazu, daß die Verriegelungseinrichtung 70 von der Verriegelungseinrichtung 50 die Antriebsbefehlssignale erhält und weiterführt von den Zugängen P10 bis 13 des Mikroprozessors zu den Antriebseinrichtungen 52a bis 52d des Schrittmotors. Während dieser Zeit bleibt das Fenster-Taktsignal auf dem Wert "Logisch-1", so daß die jeweils ausgewählten Kraftantriebseinrichtungen 52a bis 52d in einer unmodulierten konstanten Weise eingeschaltet bleiben, um ausreichend Antriebsstrom zum Verstellen des Schrittmotors 24 zu liefern.

Nach Schritt 518 wird bei Schritt 520 in eine Pausen-Unterroutine eingetreten. Diese veranlaßt, daß der Fenstertakt auf ein Niveau von "Logisch-0" bei 656 der Fig. 10 zurückkehrt, was eine spezielle Zeit ausmachen kann, beispielsweise 3,18 Millisek. nach Erzeugung des Verriegelungstaktsignals. Wenn das Fenstertaktsignal auf den niedrigen Wert zurückkehrt, wird danach der Ausgang des NOR-Gatters 55 moduliert, wie bei 658 in Fig. 10 und zwar durch den Impulsweiten-Modulator 57. Somit wird der Strom, der den Schrittmotor 24 antreibt moduliert, um den Kraftverbrauch zu verringern. Die Pausen-Unterroutine pausiert weitere 2,4 Millisek. und kehrt dann zu Schritt 522 zurück, worauf das Signal auf der Rückstellfühlleitung für die Kraftantriebseinrichtungen 52a bis 52d nach Fig. 5 überprüft wird. Wenn ein Rückstellstrom vorliegt ist der Transistor T2 eingeschaltet und ein Wert "Logisch-0" erscheint an der Rückstromfühlleitung. Wenn kein Rückstellstrom vorliegt ist dies ein Anzeichen dafür, daß ein Fehler aufgetreten ist, z. B. ein Offenkreis- oder Kurzschlußkreiszustand für den Schrittmotor an dem Verdrahtungskabelbaum oder an der Kraftantriebseinrichtung. Ein Fehlerzustand wird auch angezeigt, wenn die Antriebseinrichtungen abgeschaltet sind, aber ein Rückstellstrom vorliegt. In diesem Fall schaltet die Routine fort zu Schritt 526, der zurückführt zu Schritt 512, sofern nicht das 30. Mal in Schritt 522 nach einem Rückstellstrom geprüft wird. Ansonsten geht die Routine weiter zu Schritt 532, welche die Anzeige für einen "Problemarbeitsmodus" einstellt, und weiter zu Schritt 536.

Wenn ein Rückstellstromfehler nicht vorliegt wird die Routine weitergeschaltet von Schritt 522 zu den Schritten 524 bis 530, durch die der Schrittmotor durch Schrittmuster dreht, in Abhängigkeit davon, ob eine Aufwärts- oder eine Abwärtsschaltung durchgeführt wird. Danach führt Schritt 534 die Routine zurück zu Schritt 512, wenn der Schrittmotor 24 nicht genügend (4 oder 40 mal) weitergeschaltet worden ist, um einen Gangwechsel zu vollenden. Ansonsten schreitet die Routine fort zu Schritt 536, wo eine Unterbrechung erneut verhindert wird, wie dies zuvor im Zusammenhang mit Schritt 512 beschrieben ist.

Bei den Schritten 538 bis 540 wird der Vorgang 514 und 518 wiederholt, jedoch werden alle Antriebskommandos an den Ausgangszugängen P10 bis P13 des Mikroprozessors ebenso wie alle Kraftantriebseinrichtungen 52a bis 52d abgeschaltet, dann in Schritt 542 werden Unterbrechungen wieder zugelassen.

In den Schritten 544 bis 548 wird der Wert des "alten Übersetzungsverhältnisses" schrittweise erniedrigt oder schrittweise erhöht in Abhängigkeit davon, ob die Schaltrichtung eine Abwärtsschaltung- oder eine Aufwärtsschaltung ist. Danach wird die Schaltroutine in Schritt 550 inaktiviert und der Schritt 552 veranlaßt eine Rückkehr zum Hauptalgorithmus 300.

Der Hauptalgorithmus nach Fig. 6a bis 6e wird unterbrochen und eine Unterbrechungsroutine 600 gemäß den Figuren 9a bis 9b durchgeführt, jedesmal wenn ein Unterbrechungssignal an den Unterbrechungszugang INT des Mikroprozessors 40 anliegt. Damit wird die Unterbrechungsroutine 600 bei Schritt 601 eingeleitet, immer wenn ein Impuls des magnetischen Aufnehmers 32 für die Maschinendrehzahl oder immer dann, wenn ein Überstromimpuls vom Zähler 48 durch das NOR-Gatter 46 erhalten wird. Danach leitet Schritt 602 den Algorithmus zu Schritt 604, sofern nicht alle Unterbrechungen ausgeräumt worden sind, worauf Schritt 624 eine Rückkehr zur Hauptschleife an dem Punkt veranlaßt, an dem die Unterbrechung aufgetreten ist. Wenn die Unterbrechung von einem Impuls des Aufnehmers 32 für die Maschinengeschwindigkeit herrührte, leitet der Schritt 604 den Algorithmus zu den Schritten 612 bis 616. Dabei wird der Zähler 48 gestoppt und ausgelesen, das Unterbrechungsregister und der Zähler 48 freigesetzt und der Zähler 48 erneut in Gang gesetzt. Wenn der Zähler 48 überfließt führt der Schritt 618 den Algorithmus zu Schritt 622. Wenn der Zähler 48 nicht übergeflossen ist, wird ein neuer Zählwert als gewichteter Durchschnitt von dem neuen und den alten Zählwerten ausgerechnet mit einem Gewichtsverhältnis von 1 : 7 (neu : alt). Dann in Schritt 622 wird das Register, das das Überfließen des Zählers 48 zählt, freigemacht und der Algorithmus zu Schritt 602 zurückgeleitet.

Wenn der magnetische Aufnehmer 32 nicht die Quelle der Unterbrechung war leitet Schritt 604 den Algorithmus zu Schritt 606. Dieser leitet den Algorithmus zu Schritt 610, wenn der Zähler 48 nicht angehalten worden ist. Von dort schreitet der Algorithmus fort zu Schritt 608, worin Überflußzustand des Zählers 48 überprüft wird. Wenn der Zähler 48 nicht übergeflossen ist, wird der Zähler in Schritt 610 angehalten, zurückgestellt und beide Unterbrechungen ausgeräumt, wobei die Routine zu Schritt 602 zurückkehrt. Wenn der Zähler 48 übergeflossen ist, richtet der Schritt 608 den Algorithmus auf die Schritte 628 bis 638 aus. Bei Schritt 628 wird der Zähler 48 angehalten und zurückgestellt. Bei Schritt 630 wird die Unterbrechung ausgeräumt und dann in Schritt 632 ein Wert in ein "CRSLT1"-Register eingebracht, um der Hauptschleife anzuzeigen, daß ein Überfließen aufgetreten ist. Dann bei Schritt 634 wird der Überflußzähler schrittweise erhöht, so daß sein Inhalt die Zahl der auftretenden Überfließvorgänge des Zählers 48 repräsentiert. Bei Schritt 636 wird der Zähler gestartet. Danach veranlaßt Schritt 638 eine Rückkehr zur Hauptschleife.

Das bedeutet, daß eine Unterbrechungsroutine 600 wirksam wird, wobei der Zähler 48 die Geschwindigkeit des Motors vom Aufnehmer überprüft und eine Reihe von Überfließvorgängen des Zählers 48 in Gang hält, wobei zu viele Überfließvorgänge anzeigen, daß ein Fehlerzustand besteht.

Die Überführung der oben beschriebenen Fließschemata in Standardsprache, zur Ausrüstung des Algorithmus, wie er durch die Fließkarten in Digital-Datenprozessoren beschrieben wird, z. B. einem Mikroprozessor, ist für den Fachmann evident, so daß ein näheres Beschreiben nicht erforderlich ist.

## Patentansprüche

1. Steuerungssystem (10) für schaltbare Getriebe (12) von Motorfahrzeugen, mit einer manuell betätigbaren Einrichtung (28) zur Erzeugung manueller Gangschalt-Steuersignale; einer durch Geber (32) zur Erfassung von Fahrzeug- und Getriebeparameter betätigbaren Einrichtung (30, 34) zur Erzeugung automatischer Gangschalt-Steuersignale; Gangschalt-Betätigungseinrichtungen (18, 22) zum Schalten des Getriebes in Abhängigkeit von manuellen oder automatischen Gangschalt-Steuersignalen; einer vom Fahrer betätigbaren Betriebsart-Auswähleinrichtung (56) zum Auswählen der manuellen oder der automatischen Steuerungsart der Gangschaltung, und einer Betriebsart-Schalteinrichtung, welche bei ausgewählter automatischer Betriebsart das Steuerungssystem ohne Betätigung der Betriebsart-Auswähleinrichtung (56) und ohne Umschalten des Getriebes (12) in die Neutralstellung automatisch in die manuelle Betriebsart umschaltet, wenn vorbestimmte Betriebsbedingungen vorliegen, dadurch gekennzeichnet, daß die Betriebsart-Schalteinrichtung eine Fehlschaltfühleinrichtung aufweist, welche das Schalten der Gangschalt-Betätigungseinrichtungen (18, 22) des Getriebes (12) in Abhängigkeit von den Gangschalt-Steuersignalen überwacht und ein Fehlersignal (Schritt 372) in Abhängigkeit von einer vorbestimmten Anzahl von erfolglosen Schaltversuchen (Fehlversuche) der Gangschalt-Betätigungseinrichtung des Getriebes in Abhängigkeit von den Gangschalt-Steuersignalen erzeugt, welches die automatische Umschaltung in die manuelle Betriebsart auslöst, sowie eine Einrichtung, welche (in den Schritten 320 bis 320) die automatische Erzeugung weiterer Gangschalt-Steuersignale nach Vorliegen der vorbestimmten Anzahl von Fehlversuchen unterbindet, derart, daß danach das Getriebe (12) nur noch manuell schaltbar ist.

2. Steuerungssystem nach Anspruch 1, dadurch gekennzeichnet, daß die Fehlschaltfühleinrichtung folgende weitere Merkmale aufweist: eine Getriebeübersetzungs-Fühleinrichtung (26) zum Fühlen einer Übersetzungsstufe des Getriebes und zum Erzeugen eines korrespondierenden Signals; eine Einrichtung zum Speichern eines ersten Übersetzungsstufensignals, das dem festgestellten Übersetzungsverhältnis des Getriebes vor der Erzeugung eines Gangschalt-Steuersignals durch die Einrichtung (30, 34) entspricht; eine Einrichtung zum Speichern eines zweiten Übersetzungsstufensignals, welches dem festgestellten Übersetzungsverhältnis des Getriebes nach der Erzeugung des Gangschalt-Steuersignals durch die Einrichtung (30, 34) entspricht; eine Vergleichs-Einrichtung (370) zum Vergleichen der beiden Übersetzungsstufensignale und zum Erzeugen eines Fehlersignals (374), wenn sich diese beiden Übersetzungsstufensignale auch nach Erzeugung einer vorbestimmten Anzahl von Gangschalt-Steuersignalen nicht unterscheiden.

3. Steuerungssystem nach Anspruch 1 oder 2, dadurch gekennzeichnet, daß die Einrichtung (30, 34) zur Erzeugung automatischer Gangschalt-Steuersignale eine Einrichtung (358, 390) zum Vergleichen der von dem Geber (32) festgestellten Motorgeschwindigkeit mit vorbestimmten, ein Aufwärts- oder Abwärtsschalten auslösenden Motorgeschwindigkeitswerten aufweist, und daß eine Einrichtung (402, 404) vorgesehen ist, welche automatisch Gangschalt-Steuersignale erzeugt, welche die Gangschalt-Betätigigungseinrichtungen (18, 22) veranlassen, das Getriebe zu schalten, um die Motorgeschwindigkeit in einem vorbestimmten Bereich zu halten.

## Claims

1. Control system (10) for change-speed gears (12) of motor vehicles, with a manually operable device (28) for generating manual gear-change control signals; a device (30, 34) operable through transducers (32) for sensing vehicle and gear parameters, for generating automatic gear-change control signals; gear-change operating devices (18, 22) for changing the gear in dependence on manual or automatic gear-change control signals; an operating mode selector device (56) operable by the driver for selecting the manual or the automatic control mode of the gear changing, and an operating mode circuit arrangement which, with automatic operating mode selected, automatically switches into neutral in the manual operating mode without actuation of the operating mode selector device (56) and without a change of the gear, when predetermined operating conditions occur, characterized in that the operating mode circuit arrangement comprises a sensing device for false changes, which monitors the changes of the gear-change operating devices (18, 22) of the gear (12) in dependence on the gear-change control signals and generates an error signal (step 372) in dependence on a predetermined number of unsuccessful change attempts (error attempts) of the gear-change operating device of the gear in dependence on the gear-change control signals, which triggers the automatic switching into the manual operating mode, as well as a device which (steps 320 to 320) prevents the automatic generation of further gear-change control signals after occurrence of the predetermined number of error attempts, in such a manner that the gear (12) can there after only be changed manually.

2. Control system according to claim 1, characterized in that the false change sensing device has the following features: a gear ratio sensor device (26) for sensing a change-speed stage of the gear and for generating a corresponding signal a device for storing a first change-speed stage signal, which corresponds to the ascertained transmission ratio of the gear before the generation of a gear-change control signal by the device (30, 34); a device for storing a second change-speed stage signal, which corresponds to the ascertained transmission ratio of the gear after the generation of the gear-change control signal by the device (30, 34); a comparator (370) for comparing the two change-speed stage signals and for generating an error signal (374) when these two change-speed stage signals do not differ even after generation of a predetermined number of gear-change control signals.

3. Control system according to claim 1 or 2, characterized in that the device (30, 34) for the generation of automatic gear-change control signals comprises a device (358, 390) for comparing the engine speed determined from the transducer (32) with predetermined engine speed values triggering an up-change or a down-change, and in that a device (403, 404) is provided, which generates automatic gear-change control signals, which cause the gear-change operating devices to change the gear, in order to maintain the engine speed in a predetermined range.

## Revendications

1. Système de commanse (10) pour boîte de vitesses (12) embrayable de véhicule à moteur, comprenant un dispositif (28) pouvant être actionné manuellement pour engendrer des signaux de commande de changement de vitesse manuels; un dispositif (30, 34) pouvant être actionné, par l'intermédiaire d'un transmetteur (32) pour la détection des paramètres du véhicule et de la boîte de vitesses pour engendrer des signaux de commande de changement de vitesse automatiques; des dispositifs (18, 22) d'actionnement de changement de vitesse pour opérer le changement de vitesse dans la boîte de vitesses en fonction des signaux de commande de changement de vitesse manuels ou automatiques; un dispositif sélecteur de mode de travail (56) pouvant être actionné par le conducteur pour la sélection du mode de commande manuel ou automatique de changement de vitesse et un dispositif de commutation du mode de travail qui, lorsque le mode de travail automatique a été sélectionné, ramène automatiquement le système de commande dans le mode de travail manuel, sans l'actionnement du dispositif sélecteur de mode de travail (56) et sans avoir à mettre la boîte de vitesses (12) en position de point mort, lorsque des conditions de travail prédéterminées ont été atteintes, caractérisé en ce que le dispositif de commutation de mode de travail comporte un dispositif détecteur de fausse manoeuvre ou d'absence de changement de vitesse, qui surveille la commutation des dispositifs d'actionnement de changement de vitesse (18, 22) de la boîte de vitesse (12) réalisée en fonction des signaux de commande de changement de vitesse et qui, en fonction d'un nombre prédéterminé de tentatives infructueuses (essais manqués) de réalisation d'une commutation du dispositif d'actionnement de changement de vitesse de la boîte de vitesses en fonction des signaux de commande de changement de vitesse, engendre un signal d'erreur (étape 372) qui déclenche le retour automatique au mode de travail manuel ainsi qu'un dispositif qui interdit (dans les étapes 320 à 320) la délivrance automatique d'autres signaux de commande de changement de vitesse une fois que le nombre prédéterminé d'essais manqués a été atteint, de telle sorte qu'ensuite la boîte de vitesses (12) ne puisse plus être commandée que manuellement.

2. Système de commande selon la revendication 1, caractérisé en ce que le dispositif détecteur d'absence de changement de vitesse comporte les autres caractéristiques suivantes: un dispositif (26) détecteur de démultiplication de la boîte de vitesses pour détecter un palier de démultiplication de la boîte de vitesses et pour engendrer un signal correspondant; un dispositif pour mémoriser un premier signal de palier de démultiplication qui correspond au rapport de démultiplication de la boîte de vitesses déterminé avant la délivrance d'un signal de commande de changement de vitesse par le dispositif (30, 34); un dispositif pour mémoriser un deuxième signal de palier de démultiplication qui correspond au rapport de démultiplication de la boîte de vitesses déterminé après la délivrance du signal de commande de changement de vitesse par le dispositif (30, 34); un dispositif comparateur (370) pour comparer les deux signaux de palier de démultiplication et pour engendrer un signal d'erreur (374), lorsque ces deux signaux de palier de démultiplication ne se différencient encore pas après la délivrance d'un nombre prédéterminé de signaux de commande de changement de vitesse.

3. Système de commande selon la revendication 1 ou 2, caractérisé en ce que le dispositif (30, 34) pour la délivrance de signaux de commande de changement de vitesse automatiques comporte un dispositif (358, 390) pour comparer le régime du moteur déterminé par le transmetteur (32) avec des valeurs de régime de moteur prédéterminées déclenchant une montée ou une descente de vitesse, et qu'il est prévu un dispositif (402, 404) qui engendre des signaux de commande de changement de vites se automatiques, les quels provoquent un changement de vitesse dans la boîte de vitesses sous l'effet des dispositifs d'actionnement de changement de vites ses (18, 22) afin de maintenir le régime du moteur dans une gamme prédéterminée.

## Fig. 1

## Fig. 10

Verriegel.
Taktimpuls

654

Q-Ausgang von 78

652

Fenster-Takt
P17 von 40

650      656

Ausgang von
NOR-Gatter 55

658

1

Fig. 2

Fig. 3

Fig. 4

52a
52b
52c
52d

52 a/d

7

*Fig. 5*

Fig. 6a

Fig. 6b

**Fig. 6c**

zu 310

374

zu 382

zu 310

problem.
Arbeitsweise — 386

344

alter
Gang
= neuer G.
? — 346
nein / ja

neuer Gang
= früherer
Gang
? — 370
nein / ja

10. Schalt-
Versuch
? — 372
ja / nein

4 Schritte — 376

380

348

350

Masch.
Geschw.
Signal — 354
nein / ja

356

**Fig. 6d**

Aufwärts ~402

Abwärts ~404

Schalt-
Unterroutine ~406

*Fig. 6e*

zu 326

Beginn ~410

~412

408

*Fig. 7*

5 letzten
Auslesungen
gleich
? ~414

nein

ja

~416

Rückführung ~418

19

*Fig. 8a*

*von* 406

508
Zähler-
Auslösung

500

510
Motor
2-phasen -
Einschaltweise

*von* 526

*von* 534

512
Unterbrechung
ohne Wirkung

514
Fenster-
Taktsignal

516
Schalt-
Routine
aktiviert
?

nein

ja

518

*Fig. 8b*

518

PAUSE 520

522
Rückstellstrom vorhanden
?
nein

ja

524
Herabschaltung
?
ja

nein

526
30 ste
Mal
geprüft
?
ja
nein → zu 512

528
Fahr-Muster
links drehen

530
Fahr-Muster
rechts drehen

Problem
Modus 532

534
Schrittmotor
ausreichend
weitergeschaltet
?
ja

zu 512 ← nein

zu 536

Fig. 8c

Unterbrechung. unwirksam ~536

siehe 514 ~538

siehe 518 ~540

Unterbrech. zugelassen ~542

Aufwärts- Schaltung ? ~544

ja

nein

schrittweise Erniedrigen ~546

Schrittweise Erhöhen ~548

Schalt- routine inaktiv. ~550

Rückführ. ~552

**Fig. 9a**

Fig. 9b